Europäisches Patentamt

European Patent Office

Office européen des brevets

(19)

(11) Numéro de publication: **0 451 006 B1**

# (12) FASCICULE DE BREVET EUROPEEN

(45) Date de publication du fascicule du brevet: **29.11.95**  (51) Int. Cl.⁶: **A62D 3/00**, C04B 7/24

(21) Numéro de dépôt: **91400742.2**

(22) Date de dépôt: **20.03.91**

(54) **Procédé d'incinération de déchets.**

(30) Priorité: **02.04.90 FR 9004165**

(43) Date de publication de la demande:
**09.10.91 Bulletin 91/41**

(45) Mention de la délivrance du brevet:
**29.11.95 Bulletin 95/48**

(84) Etats contractants désignés:
**BE CH DE DK ES GB GR IT LI LU NL SE**

(56) Documents cités:
**EP-A- 0 293 982**
**EP-A- 0 347 240**
**EP-A- 0 389 320**
**FR-A- 2 370 007**

(73) Titulaire: **Pichat, Philippe**
**18, rue des Tournelles**
**F-75004 Paris (FR)**

(72) Inventeur: **Pichat, Philippe**
**18, rue des Tournelles**
**F-75004 Paris (FR)**

(74) Mandataire: **Schmit, Christian Norbert Marie**
**et al**
**Cabinet Ballot-Schmit**
**7, rue Le Sueur**
**F-75116 Paris (FR)**

Rank Xerox (UK) Business Services
(3.10/3.09/3.3.3)

EP 0 451 006 B1

**Description**

La présente invention a trait au domaine du traitement des déchets par combustion. Elle vise tout spécialement l'incinération de déchets et mélanges de déchets, sous toutes formes (solides, boues, liquides) ; de toutes natures (origine urbaine, industrielle, hospitalière ...) et pouvant présenter des dangers pour l'environnement (déchets toxiques, radioactifs, etc ...).

Les incinérateurs de déchets qui peuvent être de divers types tels que : statiques, à soles tournantes, à grilles, à lit fuidisé, à plasma, etc ..., présentent actuellement un certain nombre d'inconvénients. Parmi ceux-ci on peut citer notamment :

- Le manque de plyvalence, un même type d'incinérateur ne pouvant généralement traiter que certains types et certaines formes de déchets ;
- La fixation médiocre des produits de l'incinération et notamment des halogènes, des gaz anhydres, des acides, des oxydes d'azote, ainsi que des métaux lourds ;
- La destruction insuffisante de produits particulièrement stables comme, par exemple, les composés organochlorés ;
- La détérioration rapide des parois réfractaires due notamment à la présence de sels alcalins fondus ;
- Le rendement horaire médiocre compte-tenu de la difficulté d'évacuer les calories.
- La nécessité fréquente, d'utiliser un apport d'air enrichi en oxygène.

Certes, les types d'incinérateurs à lit fluidisé assurent une destruction correcte de certains déchets mais il est nécessaire que ces derniers soit constitués de fine particules, de granulométrie homogène et que la composition ne renferme qu'une faible partie de produits facilement fusibles tels que, notamment, des sels alcalins. Peu de déchets répondent en fait à ces conditions si ce n'est, par exemple, les boues provenant des stations d'épuration biologique d'effluents urbains. Mais, dans ce cas, les fumées d'incinérateurs contiennent des gaz toxiques tels que HCl, $NO_x$, $SO_2$, $SO_3$, etc ... qu'il est alors nécessaire de traiter par de la chaux pour obtenir, encore, un nouveau déchet.

Le document FR-A-2 370 007 décrit un procédé pour produire des ciments hydrauliques et des précurseurs de ciment selon lequel on introduit des déchets de mine et de calcaire de carrière dans une zone de plasma.

Un des buts de l'invention est de pouvoir traiter dans un même incinérateur une très grande variété de déchets de diverses provenances et dimensions ainsi que sous des états différents et en mélange (pâtes, solides, liquides).

Un autre but visé est de fixer les éléments polluants des déchets le plus rapidement possible et à l'échelle moléculaire ou atomique.

Un autre but, tout particulièrement important, est de supprimer l'utilisation d'ajouts coûteux tels que la chaux, le ciment Portland ou produits équivalents dont le contenu calorifique est important.

Enfin, au plan technologique, on vise à améliorer l'inertie mécanique, thermique et chimique du four et à augmenter la capacité de destruction des déchets pour un four donné correspondant à un investissement déterminé.

Ces buts, et d'autres encore qui apparaitront au cours de la description, peuvent être atteints par un procédé d'incinération de mélanges de déchets de toutes origines, comportant des composés halogénés, selon lequel, après concassage et broyage des fractions solides des déchets pour avoir une granulométrie inférieure à 5 mm environ puis, s'il y a lieu, ajout de déchets liquides pour obtenir une masse pâteuse, on effectue la combustion par chauffage entre 750 °C et 1350 °C en ajoutant à cette pâte un réactif, sous forme de grains de diamètres moyens inférieurs à 500 micromètres, comprenant un produit riche en carbonate de calcium, de l'oxyde de silicium et, éventuellement de l'alumine et des oxydes de fer.

La quantité de réactif ajouté varie, bien entendu, selon les types et la nature des déchets à incinérer mais elle est réglée de façon telle qu'à la sortie et dans le produit final on ait des concentrations correspondant à un rapport, en poids, du type :

$$\frac{CaO}{SiO_2 + Al_2O_3 + Fe\ O_3} > 0,45$$

Parmi les nombreux produits susceptibles de convenir comme réactif selon l'invention on peut citer, à titre illustratif : de la marne, des mélanges de calcaire et d'argile à au moins 70 %, en poids, de calcaire, des mélanges de calcaire et de produits siliceux, des sables silico-calcaires, des crus de préparation de

2

ciments et de chaux hydrauliques, des produits de lavage de matériaux de carrière etc.

De tels réactifs présentent notamment l'avantage de n'être pas coûteux et de donner lieu, lors de la combustion des déchets, à des réactions très endothermiques (dues à la décarbonation du calcaire) contrairement au cas de l'incinération conventionnelle avec ajout de chaux ou ciment. De ce fait, la température peut être sensiblement abaissée et l'on peut donc, pour un four donné et avec le même investissement, brûler beaucoup plus de déchets.

En pratique, et sans que l'invention soit pour autant limitée à de telles interprétations, le réactif précité appelé ici $R_1$ génère, lors de la combustion, un réactif $R_2$ contenant essentiellement du CaO (par décarbonation du Ca $CO_3$), de la silice modifiée au plan cristallographique, ainsi que éventuellement, de l'alumine et de l'oxyde ferrique. Ce réactif $R_2$ fixe par encapsulation les éléments polluants des déchets et, en outre, au cours de l'incinération, il se transforme en des compositions $R_3$ qui peuvent contenir par exemple : du métakaolin (CaO, $SiO_2$), de la silice à surface activée, des produits tels que : $(CaO)_4$ $Al_2O_3$ $SO_4$, $(CaO)_4$ $Al_2O_3$, Fe $_3O_4$, $(CaO)_5$ $(SiO_2)_2$ $SO_4$, $(CaO)_{12}$ $(Al_2O_3)_7$ $X_2$ (X = halogène), $(CaO)_2$ $SiO_2$ chloré (si les déchets sont chlorés) ainsi qu'un nombre important de solutions solides qui ont piègé les métaux, dont les métaux lourds et toxiques.

Comme on le sait, l'incinération des déchets conduit à 3 grands groupes de "sous-produits", à savoir : des laitiers, des cendres volantes (CV) et des déchets d'épuration de fumées (DEF).

Dans le cas de l'invention, la partie laitiers obtenue est très peu lessivable. Grâce à la mise en oeuvre de produits ($R_1$) riches en calcaire et en silice, on peut se dispenser d'ajouter un réactif extérieur pour obtenir des solides insolubles et inertes. Il suffit d'ajouter un peu d'eau ou de déchet aqueux. Toutefois, on peut ainsi traiter, si nécessaire, les déchets types laitiers obtenus par, l'un des moyens décrits pour les CV et les DEF dans les demandes de brevets français FR-A-2 644 372 (EP-A-0 389 328) et FR-A-2 644 358 (EP-A-0 389 329).

A titre d'exemple de réalisation du procédé de l'invention, on résumera ci-dessous le traitement d'un type de déchets connu pour être très difficile à incinérer correctement, à savoir des déchets industriels contenant des matières organiques chlorées.

On a utilisé à cet effet un four rotatif muni d'un dispositif de post-combustion mais on peut également mettre en oeuvre un four à cyclone. La fraction solide des déchets à traiter a été envoyée dans un concasseur-déchiqueteur puis un broyeur pour obtenir des particules de taille moyenne inférieure à 5 mm environ. On a ensuite ajouté, dans un mélangeur, des déchets liquides (boues de traitement d'eau) de façon à obtenir une pâte puis on a ajouté le réactif $R_1$ finement pulvérisé à moins de 200 micromètres. Ce réactif $R_1$, composé de calcaire et d'argile, avait la composition suivante, en poids : 77,1 % de $CaCO_3$ ; 13,9 % de $SiO_2$ ; 2,6 % d'$Al_2O_3$ ; 2,3 % de $Fe_2O_3$ ; le reste étant constitué d'oxydes alcalins essentiellement. Les déchets étaient traités au rythme de 3 tonnes/heure avec les proportions suivantes :

|  | Pouvoir calorifique inférieur (PCI) |
|---|---|
| - fraction solides broyée : 1140 kg/h | 4 000 |
| - liquides de type haut PCI : 990 kg/h | 8 500 |
| - liquides de type bas PCI : 270 kg/h | 1 500 |
| - produits chlorés : 450 kg/h | 1 000 |
| - réactif $R_1$ pulvérisé : 300 kg/h | 500 |

Les déchets étaient introduits dans le four au moyen d'un ou plusieurs brûleurs, de préférence de type coaxiaux, un brûleur particulier pouvant en outre être utilisé pour les déchets chlorés, par exemple de type pyralène. La température de flamme était de l'ordre de 1000 °C et généralement comprise entre 750 ° et 1350 °C environ.

Dans les produits finaux obtenus, on a noté que les fumées avaient des teneurs en $Cl_2$, $SO_2$, $SO_3$ ... beaucoup plus basses que celles obtenues lorsqu'on traite, conventionnellement, les déchets par la chaux ou du ciment. On avait des taux en HCl inférieurs à 100 mg/nano m$^3$. La composition renfermait essentiellement les produits de type $R_3$ susdécrits et de faibles quantités de $R_1$ et $R_2$.

Dans le but de transformer ces déchets en un matériau insoluble et compact, on les a traités, avec un peu d'eau ou produit en contenant comme indiqué dans les brevets susvisés.

Par exemple, on a ajouté à 150 parties (poids) de $R_3$, 20 parties d'un DEF provenant d'un incinérateur classique d'ordures ménagères puis on a malaxé énergiquement avec 100 parties d'un mélange de déchets industriels pâteux (à titre de source d'eau) ayant une DCO (demande chimique en oxygène) de 9000 mg/l, un pH de 7 et la présence de métaux tels que : Pb : 0,5 ppm ; Cu : 90 ; Cd : 2 ; Zn : 3 ; Fe : 0,4 et Al : 20 (quantités en ppm : parties par million). On a obtenu une solidification en moins d'une heure. Après 10 jours, le matériau dur a été soumis à un essai de lixiviation selon la norme DIN 38414. On a obtenu les résultats suivants : DCO : 200 mg/l Pb : 0,2 ; Cu : 0,1 ; Cl : 0,1 ; Zn : 0,1 ; Fe : 0,1 ; Al inférieur à 0,5 (toutes quantités exprimées en ppm).

On notera que le produit final type $R_3$ obtenu en fin d'incinération et, éventuellement de chambre de post-combustion, était constitué pour partie de fines particules (CV, DEF) et, pour une autre partie, de laitier fondu, non cristallisé, grâce à un refroidissement rapide à l'issue du four et jouant le rôle de trempe. Ce laitier a des propriétés hydrauliques pouzzolaniques et fait donc rapidement prise avec l'eau.

Le procédé selon l'invention peut être mis en oeuvre dans tout type d'incinérateur existant, sans modification structurelle.

**Revendications**

1. Procédé d'incinération de mélanges de déchets de toutes origines, comportant des composés halogénés, selon lequel les fractions solides sont concassées et broyées pour avoir une granulométrie inférieure à 5 mm environ puis l'ensemble est soumis à un chauffage entre 750 °C et 1350 °C, caractérisé en ce que, après un éventuel ajout de déchets liquides pour obtenir une masse pâteuse, on incorpore à cette dernière un réactif sous forme de poudre de grains inférieurs à 500 micromètres, comprenant un produit riche en carbonate de calcium, de l'oxyde de silicium et, éventuellement, de l'alumine et des oxydes de fer, la quantité de réactif étant dosée de façon à obtenir dans le produit final incinéré un rapport, en poids :

$$\frac{CaO}{SiO_2 + Al_2O_3 + Fe_2O_3} > 0,45$$

2. Procédé selon la revendication 1, caractérisé en ce que ledit réactif est choisi dans le groupe constitué par : marne, mélange de calcaire et d'argile à au moins 70 % de calcaire, mélange de calcaire et de produits siliceux, sables silicocalcaires, crus de préparation de ciments et chaux hydrauliques, produits de lavage de matériaux de carrière.

3. Procédé selon l'une quelconque des revendications 1 et 2, caractérisé en ce que le produit final incinéré, à propriétés hydrauliques-pouzzolaniques, est transformé en matériau dur et insoluble par mélange avec de l'eau ou un déchet contenant de l'eau.

4. composition incinérée obtenue selon le procédé des revendications 1 ou 2 et contenant du métakaolin, de la silice à surface activée, des sulfo-aluminates de Calcium tels que $(CaO)_4 \, Al_2O_3 \, SO_4$, des ferroaluminates de calcium tels que $(CaO)_4 \, Al_2O_3 \, Fe_3O_4$, des produits du type $(CaO)_5 \, (SiO_2)_2 \, SO_4$, $(CaO)_{12} \, (Al_2O_3)_7 \, X_2$ (X = halogène) sous forme de solutions solides piègeant les métaux lourds et toxiques.

5. Composition selon la revendication 4, caractérisée en ce qu'elles contiennent en outre du $(CaO)_2 \, SiO_2$ chloré.

**Claims**

1. Process for incinerating mixtures of waste from all sources comprising halogen compounds wherein the solid portions are crushed and ground so as to have a granulometry less than about 5mm and the whole is then subjected to heating at between 750°C and 1350°C, characterised in that after a possible addition of liquid waste to obtain a pasty mass a reagent is incorporated into this mass in the form of powder having particles of less than 500 micrometres and comprising a product rich in calcium carbonate, silicon oxide and possibly aluminium and iron oxides, the quantity of reagent being introduced so as to obtain in the final incinerated product a relationship, by weight, of

$$\frac{CaO}{SiO_2 + Al_2O_3 + Fe_2O_3} > 0.45$$

2. Process according to claim 1, characterised in that said reagent is selected from the group consisting of marl, a mixture of limestone and clay containing at least 70% limestone, a mixture of limestone and siliceous products, crude silico-calcareous sands for the preparation of hydraulic cements and chalks, and washing products of quarry materials.

3. Process according to any one of claims 1 and 2, characterised in that the final incinerated product, with hydraulic-pozzalanic properties, is transformed into a hard insoluble material by mixing with water or a waste containing water.

4. Incinerated composition obtained according to the process of claims 1 or 2 and containing meta kaolin, activated-surface silicon, sulpho-aluminates of calcium such as $(CaO)_4\ Al_2O_3\ SO_4$, ferro-aluminates of calcium such as $(CaO)_4\ Al_2O_3$, $Fe_3O_4$, and products of the type $(CaO)_5\ (SiO_2)_2\ SO_4$, $(CaO)_{12}\ (Al_2O_3)_7\ X_2$ (X = halogen) in the form of Solid solutions trapping the heavy toxic metals.

5. Composition according to claim 4, characterised in that it contains in addition chlorinated $(CaO)_2\ SiO_2$.

**Patentansprüche**

1. Verfahren zur Verbrennung von beliebigen Abfallgemischen, welche halogenartige Bestandteile enthalten und wobei die Feststoffanteile gemahlen und zerkleinert werden, um eine Teilchengröße von weniger als ungefähr 5 mm zu erhalten, wonach die Gesamtheit auf einen Wert zwischen 750°C und 1350°C aufgeheizt wird, dadurch gekennzeichnet, daß nach einer eventuellen Zufuhr von flüssigen Abfällen zum Erhalt einer pastösen Masse dieser ein Reagenz in Form von Pulver oder Körnchen kleiner als 500 Mikrometern zugefügt wird, das eine Verbindung enthält, die reich an Kalziumcarbonat, Siliziumoxid und gegebenenfalls Aluminiumoxid und Eisenoxiden ist, wobei die Menge dieses Reagenz derart dosiert ist, daß im erhaltenen Verbrennungsprodukt ein Gewichtsverhältnis von

$$\frac{CaO}{SiO_2 + Al_2O_3 + Fe_2O_3} > 0,45$$

erhalten wird.

2. Verfahren nach Anspruch 1, dadurch gekennzeichnet, daß das Reagenz ausgewählt ist aus der Gruppe bestehend aus: Mergel, Gemisch aus Kalk und Ton mit wenigstens 70 % Kalk, Gemisch aus Kalk und siliziumhaltigen Verbindungen, kalksilikathaltige Sande, bei der Zementherstellung anfallende ungebrannte Verbindungen und hydraulischer Kalk, bei der Waschung von Steinbruchgut anfallende Stoffe.

3. Verfahren nach einem der Ansprüche 1 und 2, dadurch gekennzeichnet, daß das erhaltene Verbrennungsprodukt mit Wasser-Pouzzolan-Eigenschaften durch Zufuhr von Wasser oder wasserhaltigen Abfällen in einen dauerhaften unlöslichen Stoff umgewandelt wird.

4. Verbrannte Zusammensetzung erhalten nach dem Verfahren gemäß Ansprüchen 1 oder 2, welche Metakaolin, Siliziumdioxid mit aktivierter Oberfläche, Kalzium-sulfoaluminate, wie z.B. $(CaO)_4\ Al_2O_3\ SO_4$, Kalzium-ferroaluminate, wie z.B. $(CaO)_4\ Al_2O_3$, $Fe_3O_4$ und Stoffe vom Typ $(CaO)_5\ (SiO_2)_2\ SO_4$, $(CaO)_{12}\ (Al_2O_3)_7\ X_2$ (X = Halogen) in Form von festen Lösungen enthält, welche die toxischen Stoffe und Schwermetalle binden.

**5.** Zusammensetzung nach Anspruch 4, dadurch gekennzeichnet, daß sie außerdem chlorhaltiges $(CaO)_2$ $SiO_2$ enthält.